# EUROPÄISCHE PATENTSCHRIFT

(11) **EP 0 927 125 B1**
(45) Veröffentlichungstag und Bekanntmachung des Hinweises auf die Patenterteilung: **24.04.2002**
(21) Anmeldenummer: 98933597.1
(22) Anmeldetag: 08.06.1998
(51) Int. Cl.: B61F 5/52, B61F 5/32

(54) **LAUFWERK FÜR EIN SCHIENENFAHRZEUG**
RUNNING GEAR FOR A RAIL VEHICLE
TRAIN DE ROULEMENT POUR VEHICULE SUR RAILS

(30) Priorität: 24.07.1997 DE 19731867
(43) Veröffentlichungstag der Anmeldung: 07.07.1999
(73) Patentinhaber: DaimlerChrysler Rail Systems GmbH, 13627 Berlin (DE)
(72) Erfinder: HACHMANN, Ulrich, D-90602 Pyrbaum (DE); HOROSCHENKOFF, Alexander, D-81373 München (DE); EMMERLING, Stefan, D-85579 Neubiberg (DE); MAURITZ, Christian, D-70771 Leinfelden (DE)
(74) Vertreter: Thielmann, Andreas
(86) Internationale Anmeldenummer: EP9803414
(87) Internationale Veröffentlichungsnummer: WO9905014

(56) Entgegenhaltungen:
- EP-A- 0 363 573
- EP-A- 0 547 010
- DE-A- 4 241 300
- DE-C- 3 612 797

## Beschreibung

Die Erfindung betrifft ein Laufwerk gemäß dem Oberbegriff des ersten Anspruchs.

Bei einem bekannten Laufwerk dieser Art (DE 29 52 182 A1) besteht der als inte-grales Bauteil aus Längsträgern und Querträgern aufgebaute Laufwerkrahmen aus federnd elastischem faserverstärkten Werkstoff. Die Längsträger weisen dabei jeweils einen zugleich die Primärfederung bildenden Arm auf, dessen freies Ende mit einem Radlager verbunden ist. Von Nachteil ist bei diesem Aufbau, daß die jeweils zugeordneten Räder bzw. Radsätze nicht mit der notwendigen Zuverlässigkeit geführt werden. Dabei treten in Folge der exzentrischen Krafteinleitung zusätzliche Momente in den Biegefedern auf.

Daneben ist ein Laufwerk für ein Schienenfahrzeug bekannt (EP 0 547 010 A1) bei dem der aus Stahlwerkstoffen gefertigte Laufwerkrahmen eine Querträgerstruktur besitzt, an die Längsträger in Form von elastischen Biegefedern angesetzt sind. Den Schienenrädern ist jeweils außenseitig wie innenseitig ein Radlager zugeordnet. Jedes Radlager ist dabei zwischen den freien Enden eines Federpaares festgesetzt.

Der Erfindung liegt die Aufgabe zugrunde, bei einem Laufwerk gemäß dem Oberbegriff des ersten Anspruchs Maßnahmen zu treffen, durch welche bei erhöhtem Federungskomfort eine funktionsgerechte Beanspruchung der Biegefedern erreicht wird.

Die Lösung dieser Aufgabe erfolgt gemäß der Erfindung durch die kennzeichnenden Merkmale des ersten Anspruchs.

Bei einer Ausgestaltung eines Laufwerks gemäß der Erfindung bewirkt die Anordnung von zwei oder mehr faserverstärkten Kunststoff-Biegefedern je Radlager in Folge einer verminderten Gesamtbeanspruchung der einzelnen Biegefedern die Realisierung der Primärfederung zwischen den Schienenrädern und dem Laufwerksrahmen in einem deutlich vergrößerten Steifigkeitsbereich. Zusätzliche Federungselemente können dadurch vermieden werden. Außerdem wird durch die zentrische Anordnung der einzelnen Radlager zwischen den zugehörigen Enden der Biegefedern eine weitgehend momentenfreie Krafteinleitung realisiert, die erhebliche Vorteile beim Fahrkomfort und bei der Beanspruchung der Biegefedern selbst bietet. Durch die Anordnung von mehreren Biegefedern je Radlager ist eine Redundanz hinsichtlich der Anbindung des Radsatzlagergehäuses an die Biegefedern, der Radsatzführung und der Anbindung der Biegefedern an die Querträgerstruktur gegeben. Der Laufwerksrahmen übernimmt somit neben der Aufgabe der Radsatzführung auch die Primärfederung, wobei zur Beeinflussung der Quersteifigkeit der Biegefederanordnung senkrecht zur Fahrtrichtung des Laufwerks die als Blattfedern ausgebildeten Biegefedern wenigstens im federnden Bereich in Längsrichtung, also im Bereich zwischen Radlager und Querträgerstruktur, welche die beiden Biegefederanordnungen verbindet, geschlitzt sind. Es sind so mehrere Biegefedern in einer Ebene nebeneinander angeordnet.

Zur Erzielung einer optimalen Federungscharakteristik können die Biegefedern im unbelasteten Zustand S-förmig von der Querträgerstruktur aus nach unten zu den Radsätzen hin ausschwingen. Um außerdem eine geringe Baubreite zu erzielen, können die Biegefedern übereinander angeordnet sein. Es können auch je Längsträger des Drehgestellrahmens vier Biegefedern übereinander angeordnet werden, wobei jeweils zwei Enden der Biegefedern ein zugeordnetes Radlager unter- und die beiden weiteren zugehörigen Enden dieser Biegefederanordnung das betreffende Radlager übergreifen. Dadurch wird eine symmetrische Kraftübertragung zwischen Radlager und Fahrwerksrahmen erzielt. Zwischen den einzelnen Biegefedern wird dabei vorzugsweise ein freier Spalt belassen, so daß die einzelnen, einem Radlager zugeordneten Biegefedern unter üblichen Betriebsbedingungen nicht in Reibanlage miteinander treten. Die einzelnen Biegefedern sind dabei untereinander im Bereich der Querträgerstruktur starr verbunden und bilden vorzugsweise mit der Querträgerstruktur eine Baueinheit oder sind einstückig mit einem zentralen Querträger verbunden. Die jeweils zusammengehörigen Enden der Biegefederanordnung können schubweich gelenkig am oder im zugehörigen Radlagergehäuse gelagert sein, damit sie in Fahrtrichtung auftretende Stöße und Schwingungen gedämpft über die in Längsrichtung relativ steifen Biegefedern auf den Fahrwerkrahmen übertragen können. Ist dagegen die Längselastizität der Biegefedern ausreichend, dann können sie auch starr am jeweils zugehörigen Radlagergehäuse festgesetzt werden. Es kann jedoch auch zweckmäßig sein, die Enden der Biegefedern am Gehäuse des zugehörigen Radlagers mittels gegebenenfalls elastisch geführter Schwenkbolzen anzulenken, deren Achsen parallel zur Radachse verlaufen. Es bildet sich hierdurch eine Biegelinie aus, die der Kragbalkenbiegung entspricht. Die Biegefedern werden dann im Bereich ihrer Enden nicht auf Knickung bzw. Biegung beansprucht. Die Radsätze können dabei auch in querelastischen Radlagern geführt sein, um Querschwingungen aufnehmen zu können und eine gewisse Radialeinstellung der Radsätze zu ermöglichen. Zudem können in die Biegefedern Dämpferelemente eingebaut werden, die Schwingungsenergie verzehren. Dabei können diese Dämpferdruckelemente zwischen die Radlager, die Biegefedern und die Querträgerstruktur des Laufwerkrahmens gesetzt sein und an denselben kraftgekoppelt sitzen. Die Querträgerstruktur kann dabei durch einen die Längsträger verbindenden Querträger und ein zusätzliches Rahmenversteifungselement gebildet sein. Dieses Rahmenversteifungselement sitzt zentral am Laufwerksrahmen und ist insbesondere an den Längsträgern festgesetzt. Auf dem plattenförmig ausgebildeten Rahmenversteifungselement kann eine Drehzapfenanordnung zur Kupplung des Laufwerks mit einem darüber angeordneten Wagenkasten vorgesehen sein. Insbesondere kann das Rahmenversteifungselement feststehende Bremszangen von Scheibenbremsen tragen, deren Bremsscheiben auf den mit den Schienenrädern rotierenden Achsen festgesetzt sind.

Dabei kann in die Achse wenigstens eines Radsatzes eine Schlupfkupplung eingesetzt werden, die dem Radsatz zumindest weitgehend die Laufeigenschaften eines Losradpaares verleiht.

Die Biegefedernanordnung kann je Radlager auch eine ungerade Zahl von Biegefedern aufweisen und es können je nach den gegebenen Platzverhältnissen ungerade Zahlen von Blattfedern ein Radlager über- bzw. untergreifen.

Insgesamt ergibt sich somit ein Laufwerk für ein Schienenfahrzeug, das neben einem einstückig herstellbaren Laufwerksrahmen, der zugleich die Primärfederung übernimmt, auch eine erheblich verbesserte Stabilität der Radsatzführung gewährleistet, die durch die symmetrische Halterung der Radsatzlager zwischen mehreren Biegefedern realisiert ist und dabei eine weitgehend momentenfreie Krafteinleitung ermöglicht. Zugleich können die mehreren Biegefedern besser an das jeweils geforderte Betriebsverhalten angepaßt werden und erbringen eine wesentliche Verbesserung der vertikalen Nachgiebigkeit der Gesamtanordnung, so daß zusätzliche fremde Federkomponenten entfallen können.

Die Erfindung ist nachfolgend anhand der Prinzipsskizzen eines Ausführungsbeispiels näher erläutert.

Es zeigen:
- Fig. 1: eine Seitenansicht eines als Drehgestell ausgebildeten zweiachsigen Laufwerks,
- Fig. 2: eine Draufsicht auf das Laufwerk nach Figur 1,
- Fig. 3: eine Seitenansicht eines abgeänderten Laufwerks,
- Fig. 4: eine starre Befestigung an einem Radlager,
- Fig. 5: eine gelenkige Anlenkung von Biegefedern an ein Radlager und
- Fig. 6: eine elastische Anlenkung von Biegefedern an ein Radlager.
- Fig. 7: eine Draufsicht auf ein Laufwerk mit längsgeschlitzten Bigefedern

Ein Laufwerksrahmen für ein Schienenfahrzeug weist in Fahrtrichtung gerichtete, außenseitig von Schienenrädern 1 verlaufende Längsträger 2 auf. Jeweils zwei der vier Schienenräder 1 besitzen als Radsatz eine gemeinsame, quer zur Fahrtrichtung verlaufende Achse 3. Die zugehörigen, außenseitig liegenden Radlager 4 lagern die Radachsen 3 und sind ihrerseits mit dem zugehörigen Ende des jeweils benachbarten Längsträgers verbunden. Die Längsträger 2 sind im Bereich ihrer Längsmitte durch eine Querträgerstruktur 5 vorzugsweise starr miteinander verbunden. An den Verbindungsstellen zwischen Querträgerstruktur 5 und Längsträgern 2 befindet sich jeweils eine Sekundärfeder 6, die insbesondere als relativ quersteife Luft- oder Vollgummifeder ausgebildet ist.

Die Längsträger 2 bestehen aus elastischem, faserverstärktem Kunststoff und bewirken neben der Führung der beiden Radsätze aufgrund ihrer Elastizität auch gleichzeitig die notwendige Federung zwischen den Radsätzen und dem Laufwerksrahmen. Dabei sind zumindest die Endbereiche der Längsträger als Biegefedern ausgebildet. Um dabei einen symmetrischen Kraftfluß und eine hohe Sicherheit zu erzielen, bestehen die Längsträger je zumindest aus zwei Biegefedern, zwischen deren zusammengehörigen Enden jeweils ein Radlager festgesetzt ist.

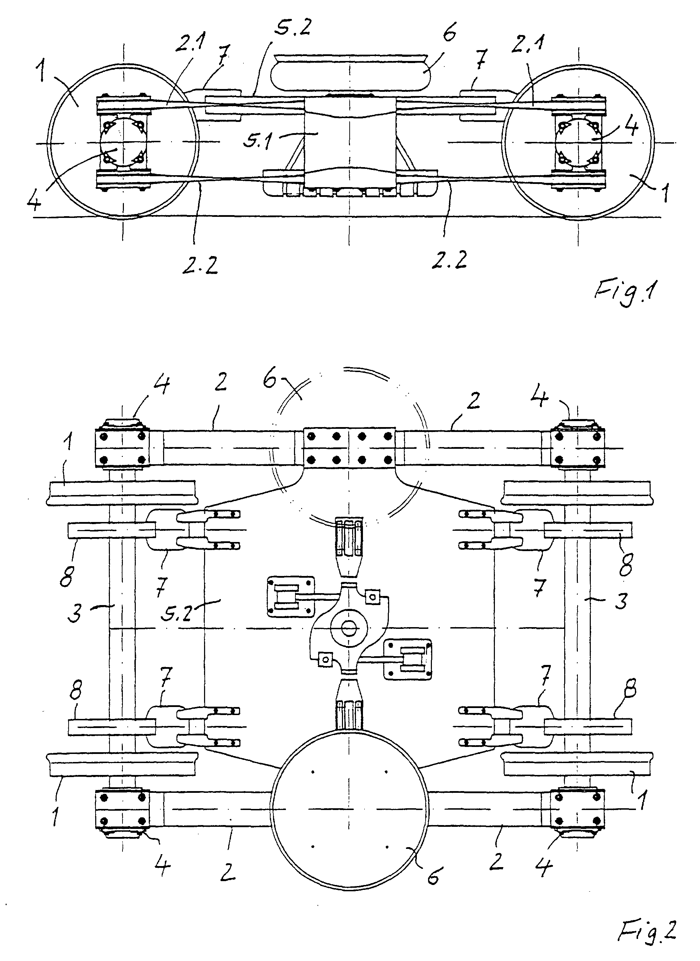

Gemäß Fig. 1 ist jedes Radlager 4 zwischen zwei mit Abstand übereinander angeordneten Biegefedern 2.1 und 2.2 angeordnet. Die Biegefedern 2.1 und 2.2 verlaufen dabei in horizontaler Richtung parallel zueinander, wobei diese Lage dem Normalbelastungsfall bei auf die Primärfederelemente aufgesetztem Wagenkasten entspricht. Im unbelasteten Herstellungszustand können diese Biegefedern 2.1 und 2.2 flach S-förmig geschwungen sein und laufen dann mit ihrem freien Ende etwas nach unten aasgelenkt in Fahrtrichtung.

Bei der Ausführungsform nach Fig. 3 sind die Längsträger aus vier senkrecht übereinander mit Abstand voneinander angeordneten Biegefedern 2.1, 2.11, 2.2 und 2.22 gebildet. Dabei liegen jeweils zwei Biegefedern 2.1 und 2.11 oberhalb der die Achsen 3 der Räder 1 verbindenden Ebene und die beiden anderen unterhalb dieser Ebene. Dabei übergreifen die oberen Biegefedern 2.1 und 2.11 das jeweilige Radlager 4, während es die weiteren Biegefedern 2.2 und 2.22 untergreifen. Alle Enden der Biegefedern sind dabei mechanisch mit dem zugehörigen Radlager 4 gekuppelt. Die einzelnen Biegefedern erstrecken sich dabei von einem vorderen Radlager bis zum seitengleichen Radlager des anderen Radsatzes.

Die Querträgerstruktur 5 weist einen im Zentrum angeordneten quer zur Fahrtrichtung verlaufenden Querträger 5.1 auf, der von einem plattenförmigen Rahmenversteifungselement 5.2 an der Oberseite überdeckt ist. Das Rahmenversteifungselement 5.2 verkuppelt querträgerunabhängig die Längsträger 2. Dieses Rahmenversteifungselement 5.2 ist zentral und in horizontaler Lage zwischen den Längsträgern und den Achsen 3 der vorderen und hinteren Radsätze angeordnet und trägt Bremszangen 7 von Scheibenbremsen, deren Bremsscheiben 8 an den Achsen 3 der Radsätze befestigt sind.

Alle Biegefedern 2.1 - 2.22 sind im Bereich der Querträgerstruktur 5 starr miteinander verbunden. Sie können insbesondere auch starr mit der Querträgerstruktur und dabei vorzugsweise zumindest mit dem Querträger 5.1 einstückig ausgebildet sein. Der Drehgestellrahmen kann so mit seinen als Biegefedern ausgebildeten Längsträgern 2 und zumindest seinem Querträger 5.1 und gegebenenfalls auch mit seinem Rahmenversteifungselement 5.2 in einem Arbeitsgang hergestellt werden. Dabei kann an den Laufwerksrahmen auch eine Drehzapfenanordnung 9 angesetzt werden, welche eine kraftschlüssige Verbindung zwischen dem als Drehgestell ausgebildetem Laufwerk und dem darauf aufzusetzenden Wagenkasten bereitstellt.

Gemäß Fig. 4 ist das Radlager 4 unmittelbar und unelastisch mit den zugehörigen Enden der Biegefedern 2.1 und 2.2 verbunden. Es bildet sich hierbei eine S-förmige Biegelinie aus. Dabei ist der Montageaufwand gering. Auch fehlen Verschleißteile, so daß nur ein geringer Wartungsaufwand erforderlich ist. Zudem ist diese Ausbildung dann zweckmäßig, wenn eine vergleichsweise steife Federcharakteristik gewünscht wird.

Eine abgeänderte Verbindung zwischen Radlager 4 und den zugehörigen Enden der Biegefedern 2.1 und 2.2 ist in Fig. 5 gezeigt. Hierbei sind die freien Enden der Biegefedern 2.1 und 2.2 jeweils über Schwenkzapfen 10 mit dem Radlager 4 verbunden, wobei diese Schwenkzapfen 10 parallel zur Radachse 3 verlaufen und in einer senkrechten, die Achse 3 aufnehmenden Ebene symmetrisch zur Achse 3 und mit Abstand davon am Gehäuse des Radlagers 4 angelenkt sind. Es bildet sich hierbei eine Biegelinie aus, wie sie sich beim Kragbalken einstellt. Dabei läßt sich das Radsatzgehäuse in einfacher Weise wechseln, da nur die Schwenkzapfen entfernt und wieder eingebaut werden müssen.

Eine elastische, schubweiche Verbindung zwischen dem jeweiligen Radlager 4 und den zugehörigen Biegefedern 2.1 und 2.2 zeigt Fig. 6. Dabei ist zwischen das Radlager 4 und die Enden der Biegefedern 2.1 und 2.2 jeweils ein gummielastisches Verbindungselement eingefügt, das insbesondere in Fahrtrichtung auftretende Stöße und Schwingungen dämpft und so zu einem ruhigen Lauf des gesamten Laufwerks beiträgt. Hierbei läßt sich die Biegelinie durch Wahl der Steifigkeit des elastischen Verbindungselement von S-förmiger Ausbildung (hartes Verbindungselement) bis zur Charakteristik der Kragbalkenbiegung (relativ weiches Verbindungselement) variieren.

Daneben können die beiden Radsätze auch in querelastischen Radlagern geführt sein, um Querschwingungen elastisch auf den Laufwerksrahmen zu übertragen. Zudem kann die Einstellung von Querschwingungen auch über gummielastische Elemente zwischen Radlager 4 und Blattfedern erfolgen. Auch können zur Geräuschdämpfung in die Biegefedern Dämpferefemente eingebaut sein, die das freie Schwingen bedämpfen. Dabei ist es zweckmäßig, derartige Dämpferelemente einerseits an den Radlagern 4 und andererseits an der Querträgerstruktur 5 zu halten, wenn die Biegefedern 2.1 - 2.22 unbeeinflußt von derartigen Dämpfungselementen gestaltet werden sollen. Außerdem kann in die Achse wenigstens eines Radsatzes eine Schlupfkupplung eingesetzt sein, um den betreffenden Rädern 1 die Betriebscharakteristik eines Losradpaares zu ermöglichen.

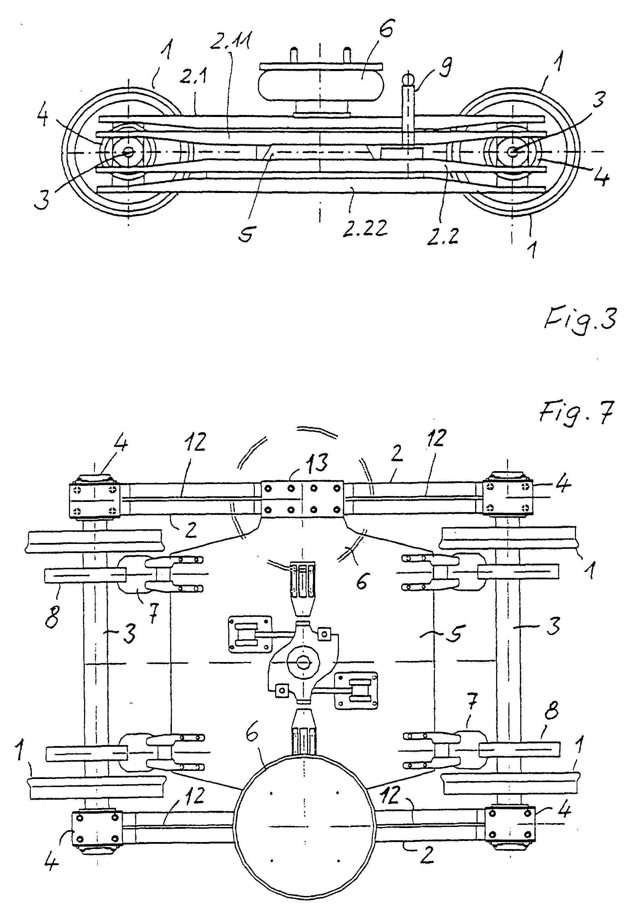

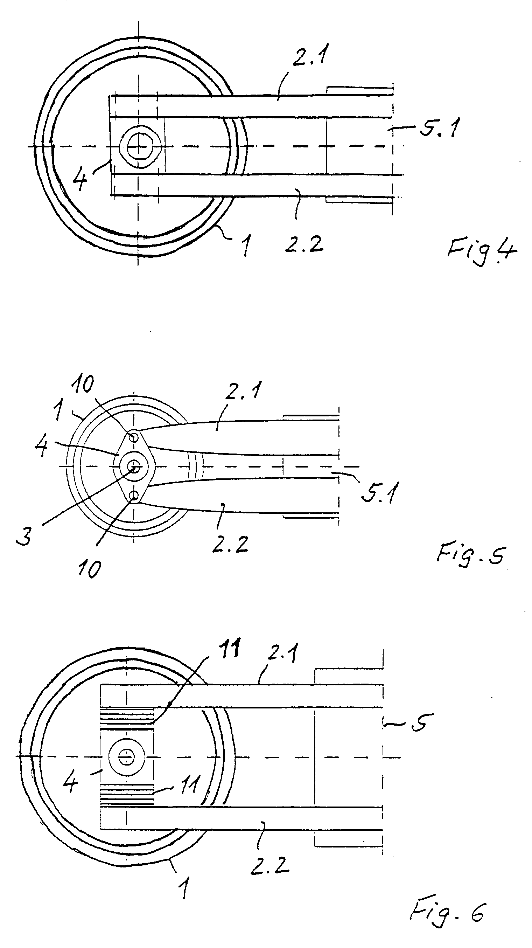

Als zwechmäßig erweist es sich, eine, mehrere oder auch alle Biegefedern gemäß Fig. 7 bei sonst unverändertem Aufbau mit einem in ihrer Längsrichtung verlaufenden Längsschlitz 12 zu versehen, der sich insbesondere zwischen dem jeweiligen Radlager 4 und der jeweiligen Verbindungsstelle 13 mit der Querträgerstruktur 5 erstreckt. Hierdurch wird die Federcharakteristik beeinflußt und die Möglichkeit geschaffen, die Cluersteifigkeit der Federanordnung zu verändern. Dabei kann sich die Länge der Schlitze 12 auch nur auf Teilbereiche der Federlänge erstrecken.

Zur vereinfachten Herstellung ist es dabei von Vorteil, zumindest die in einer Längsflucht liegenden Biegefedern einstückig miteinander zu verbinden, wodurch das feste Verbinden mit der Querträgerstruktur im Bereich der Verbindungsteile 13 erleichtert wird.

## Patentansprüche

1. Laufwerk für ein Schienenfahrzeug mit federnden Längsträgern (2) aus Kunststoff, vorzugsweise aus Faserverbundwerkstoff, die mittels einer Querträgerstruktur (5) miteinander und an ihren freien Enden mit Radlagern (4) für Schienenräder (1) verbunden sind, **dadurch gekennzeichnet, daß** die Längsträger (2) jeweils mindestens zwei räumlich übereinander angeordnete Biegefedern (2.1, 2.2, 2.11 bzw. 2.22) aufweisen, daß jeweils zwischen freien Enden von Biegefedern ein Radlager (4) festgesetzt ist und daß zumindest eine Biegefeder im federnden Bereich zwischen Radlager (4) und Querträgerstruktur (5) eine in Längsrichtung verlaufende Schlitzung (12) aufweist.

2. Laufwerk nach Anspruch 1, **dadurch gekennzeichnet, daß** die Biegefedern (2.1, 2.2, 2.11 bzw. 2.22) im unbelasteten Zustand S-förmig von der Querträgerstruktur (5) aus nach unten ausgelenkt sind.

3. Laufwerk nach Anspruch 1 oder 2, **dadurch gekennzeichnet, daß** je Längsträger (2) vier Biegefedern (2.1, 2.2, 2.11 und 2.22) übereinander angeordnet sind, von welchen zumindest jeweils zwei benachbarte Enden ein Radlager (4) unter- und weitere zugehörige Enden dieses Radlager (4) übergreifen.

4. Laufwerk nach wenigstens einem der Ansprüche 1 bis 3, **dadurch gekennzeichnet, daß** die Biegefedern (2.1 bis 2.22) miteinander im Bereich der Querträgerstruktur (5) starr verbunden sind.

5. Laufwerk nach wenigstens einem der Ansprüche 1 bis 4, **dadurch gekennzeichnet, daß** die Biegefedern (2.1 bis 2.22) mit der Querträgerstruktur (5) starr verbunden sind.

6. Laufwerk nach wenigstens einem der Ansprüche 1 bis 5, **dadurch gekennzeichnet, daß** die Längsträger (2) mittels eines zusätzlichen horizontal liegenden Rahmenversteifungselements (5.2) miteinander verkuppelt sind.

7. Laufwerk nach Anspruch 6, **dadurch gekennzeichnet, daß** das Rahmenversteifungselelement (5) zentral angeordnet ist und Teile von Radbremseinrichtungen (Zange 7, Scheibe 8) und/oder eine zentrale Drehzapfenanordnung (9) für einen aufzulagernden Wagenkasten trägt.

8. Laufwerk nach wenigstens einem der Ansprüche 1 bis 7, **dadurch gekennzeichnet, daß** zusammengehörige Enden der Biegefedern (2.1, 2.2, 2.11 und 2.22) schubweich gelenkig am oder im zugehörigen Radlagergehäuse (4) gelagert sind.

9. Laufwerk nach wenigstens einem der Ansprüche 1 bis 7, **dadurch gekennzeichnet, daß** die Enden der Biegefedern (2.1, 2.2, 2.11 und 2.22) am zugehörigen Radlagergehäuse (4) starr festgesetzt sind.

10. Laufwerk nach wenigstens einem der Ansprüche 1 bis 7, **dadurch gekennzeichnet, daß** die Enden der Biegefedern (2.1, 2.2, 2.11 und 2.22) am Gehäuse der zugehörigen Radlagers (4) mittels Schwenkzapfen (10) angelenkt sind, deren Achsen parallel zur Radachse (3) verlaufen.

11. Laufwerk nach wenigstens einem der Ansprüche 1 bis 10, **dadurch gekennzeichnet, daß** die Radsätze in querelastischen Radlagern geführt sind.

12. Laufwerk nach wenigstens einem der Ansprüche 1 bis 11, **dadurch gekennzeichnet, daß** in die Biegefedern (2.1, 2.2, 2.11 und 2.22) Dämpferelemente eingebaut sind.

13. Laufwerk nach wenigstens einem der Ansprüche 1 bis 10, **dadurch gekennzeichnet, daß** die Dämpferelemente zwischen Radlager (4) und Querträgerstruktur (5) angeordnet sind.

14. Laufwerk nach wenigstens einem der Ansprüche 1 bis 13, **dadurch gekennzeichnet, daß** in die Achse (3) wenigstens eines Radsatzes eine Schlupfkupplung eingesetzt ist.

## Claims

1. Running gear for a rail car with elastic longitudinal beams (2) made out of plastic material, preferably out of a fiber composite material, which are connected to each other by a traverse structure (5) and at their free ends with wheel bearings (4) for rail wheels (1), **characterized in that** the longitudinal beams (2) each exhibit at least two flexion springs (2.1, 2.2, 2.11 or 2.22) situated spatially one above the other, **in that** a wheel bearing (4) is fixed between the respectively free ends of flexion springs, and **in that** in the elastic area between the wheel bearing (4) and traverse structure (5) at least one flexion spring exhibits a slit (12) running in the longitudinal direction.

2. Running gear according to claim 1, **characterized in that** the flexion springs (2.1, 2.2, 2.11 or 2.22) are downwardly deflected away from the traverse structure (5) in an S shape when unloaded.

3. Running gear according to claim 1 or 2, **characterized in that** four flexion springs (2.1, 2.2, 2.11 and 2.22) per longitudinal beam (2) are situated over each other, of which at least two adjacent ends extend below a wheel bearing (4), and the further associated ends extend above said wheel bearing (4) respectively.

4. Running gear according to at least one of claims 1 to 3, **characterized in that** the flexion springs (2.1 to 2.2) are rigidly connected to each other in the area of the traverse structure (5).

5. Running gear according to at least one of claims 1 to 4, **characterized in that** the flexion springs (2.1 to 2.2) are rigidly connected with the traverse structure (5).

6. Running gear according to at least one of claims 1 to 5, **characterized in that** the longitudinal beams (2) are coupled together by means of an additional, horizontal frame stiffening element (5.2).

7. Running gear according to claim 6, **characterized in that** the frame stiffening element (5) is arranged centrally, and carries parts of the wheel braking devices (jaws 7, disk 8) and/or a central pivot pin arrangement (9) for a car body to be supported.

8. Running gear according to at least one of claims 1 to 7, **characterized in that** associated ends of the flexion springs (2.1, 2.2, 2.11 and 2.22) are hinged in a shear compliant manner to or in the associated wheel bearing casing (4).

9. Running gear according to at least one of claims 1 to 7, **characterized in that** the ends of the flexion springs (2.1, 2.2, 2.11 and 2.22) are rigidly fixed on the associated wheel bearing casing (4).

10. Running gear according to at least one of claims 1 to 7, **characterized in that** the ends of the flexion springs (2.1, 2.2, 2.11 and 2.22) are hinged to the casing of the associated wheel bearing (4) via swiveling pins (10), whose axes run parallel to the wheel axis (3).

11. Running gear according to at least one of claims 1 to 10, **characterized in that** the wheel sets are guided in transverse-elastic wheel bearings.

12. Running gear according to at least one of claims 1 to 11, **characterized in that** damping elements are built into the flexion springs (2.1, 2.2, 2.11 and 2.22).

13. Running gear according to at least one of claims 1 to 10, **characterized in that** the damping elements are situated between the wheel bearing (4) and traverse structure (5).

14. Running gear according to at least one of claims 1 to 13, **characterized in that** a slip coupling is inserted into the axle (3) of at least one wheel set.

## Revendications

1. Mécanisme de roulement pour un véhicule sur rails avec des longerons (2) à ressort en matière synthétique, de préférence dans un matériau composite renforcé par fibres, qui sont reliés les uns aux autres au moyen d'une structure de traverse (5) et à leurs extrémités libres avec des paliers (4) pour roues de rails (1), **caractérisé en ce que** les longerons (2) présentent chacun au moins deux ressorts de flexion (2.1, 2.2, 2.11, respectivement 2.22) disposés dans l'espace l'un au-dessus de l'autre, **en ce qu'**un palier de roue (4) est fixé chaque fois entre des extrémités libres de ressorts de flexion et **en ce qu'**au moins un ressort de flexion présente dans la zone élastique entre palier de roue (4) et structure de traverse (5) une fente (12) orientée dans le sens longitudinal.

2. Mécanisme de roulement selon la revendication 1, **caractérisé en ce que** les ressorts de flexion (2.1, 2.2, 2.11, respectivement 2.22) sont déviés en forme de S, quand ils ne sont pas chargés, à partir de la structure de traverse (5) vers le bas.

3. Mécanisme de roulement selon la revendication 1 ou la revendication 2, **caractérisé en ce que** quatre ressorts de flexion (2.1, 2.2, 2.11 et 2.22) par longeron (2) sont disposés l'un au-dessus de l'autre, dont au moins deux extrémités voisines enserrent par le dessous un palier de roue (4) et d'autres extrémités correspondantes enserrent par le dessus ce palier de roue (4).

4. Mécanisme de roulement selon au moins l'une quelconque des revendications 1 à 3, **caractérisé en ce que** les ressorts de flexion (2.1 à 2.22) sont reliés entre eux de manière rigide dans la zone de la structure de traverse (5).

5. Mécanisme de roulement selon au moins l'une quelconque des revendications 1 à 4, **caractérisé en ce que** les ressorts de flexion (2.1 à 2.22) sont reliés de manière rigide avec la structure de traverse (5).

6. Mécanisme de roulement selon au moins l'une quelconque des revendications 1 à 5, **caractérisé en ce que** les longerons (2) sont accouplés l'un à l'autre au moyen d'un élément de raidissement de cadre (5.2) supplémentaire situé horizontalement.

7. Mécanisme de roulement selon la revendication 6, **caractérisé en ce que** l'élément de raidissement de cadre (5) est disposé au centre et porte des pièces de dispositifs de freinage de roues (pince 7, disque 8) et/ou une disposition de pivot central (9) pour une caisse de voiture devant être supportée.

8. Mécanisme de roulement selon au moins l'une quelconque des revendications 1 à 7, **caractérisé en ce que** des extrémités des ressorts de flexion (2.1, 22, 2.11 et 2.22) allant de pair sont montées de manière articulée sur le logement du palier de roue (4) correspondant ou dans ledit logement de manière élastique en cisaillement.

9. Mécanisme de roulement selon au moins l'une quelconque des revendications 1 à 7, **caractérisé en ce que** les extrémités des ressorts de flexion (2.1, 2.2, 2.11 et 2.22) sont fixées de manière rigide sur le logement de palier de roue (4) correspondant.

10. Mécanisme de roulement selon au moins l'une quelconque des revendications 1 à 7, **caractérisé en ce que** les extrémités des ressorts de flexion (2.1, 2.2, 2.11 et 2.22) sont articulées sur le logement du palier (4) correspondant au moyen de tourillons de pivotement (10) dont les axes sont orientés parallèlement à l'axe des roues (3).

11. Mécanisme de roulement selon au moins l'une quelconque des revendications 1 à 10, **caractérisé en ce que** les jeux de roues sont guidés dans des paliers élastiques dans le sens transversal.

12. Mécanisme de roulement selon au moins l'une quelconque des revendications 1 à 11, **caractérisé en ce que** des éléments amortisseurs sont montés dans les ressorts de flexion (2.1, 2.2, 2.11 et 2.2).

13. Mécanisme de roulement selon au moins l'une quelconque des revendications 1 à 10, **caractérisé en ce que** les éléments amortisseurs sont disposés entre palier de roue (4) et structure de traverse (5).

14. Mécanisme de roulement selon au moins l'une quelconque des revendications 1 à 13, **caractérisé en ce qu'**un accouplement à glissement est inséré dans l'axe (3) d'au moins un jeu de roues.
